# EUROPEAN PATENT SPECIFICATION

(11) **EP 2 989 879 B1**
(45) Date of publication and mention of the grant of the patent: **20.04.2022**
(21) Application number: 15182543.7
(22) Date of filing: 26.08.2015
(51) Int. Cl.: A01C 23/00

(54) **A SLURRY DISTRIBUTOR**
JAUCHEVERTEILER
DISTRIBUTEUR DE FUMIER LIQUIDE

(30) Priority: 28.08.2014 DK 201400478
(43) Date of publication of application: 02.03.2016
(73) Proprietor: Sørensen, Harry Højvang, 6818 Årre (DK)
(72) Inventor: Sørensen, Harry Højvang, 6818 Årre (DK)
(74) Representative: Skov, Anders

(56) References cited:
- DE-U1-202011 050 654
- DE-U1-202013 008 267
- US-A- 4 620 804
- US-A1- 2012 134 831

## Description

The present invention relates to a slurry distributor with an eccentrically arranged bearing.

### Background of the invention

In connection with the spreading of slurry with a slurry spreading equipment, slurry distributors are typically used which shred the slurry from a larger hose or a larger pipe and distribute it into many smaller outlets.

In known slurry distributors, which are equipped with an eccentric bearing, this bearing usually consists of a one-time lubricated ball bearing. As the shaft in such systems is surrounded by slurry/liquid, leaks will eventually occur, providing access for the fluid to penetrate the bearing. Moreover, such slurry spreading equipment is often out of use for longer periods. This means, among other things, that rust can develop in the bearings, which are then stuck, and eventually the lubricant is washed away causing a breakdown.

Manual re-lubrication of such ball bearings is rather cumbersome, as it typically requires an almost complete dismantling of the entire slurry distributor.

DE 20 2011 050 654 U1 discloses one such slurry distributor for use in slurry spreading equipment. The slurry distributor comprises a distributor housing containing a bearing with a bearing housing on which are mounted eccentrically arranged cutter rings. This document does not disclose that a reservoir for lubricant is arranged so as to surround the bearing and this document neither discloses inclusion of an external container for lubricant for supplying lubricant to that reservoir through an internal channel.

### Brief description of the invention

It is an objective of the present invention to overcome the above-identified disadvantages of the known solutions within the art.

Thus, the invention relates to a slurry distributor for use in a slurry spreading equipment, said slurry distributor comprising a distributor housing containing a ball bearing with a bearing housing, on which are mounted one or more eccentrically arranged cutter rings, characterized in that a reservoir for a lubricant in the form of lubricating oil or grease is arranged around the bearing, said reservoir is having the form of a cavity surrounding the ball bearings. which reservoir is connected with an external container for the lubricant through an internal channel within the slurry distributor and a hose connecting the slurry distributor with the external container.

Such a configuration enables a continuous lubrication of the ball bearing, because the reservoir around the bearing can be supplied with lubricant from the external container through the hose and the internal channel.

In an embodiment of the invention, the slurry distributor further comprises a prechamber for the lubricant, which prechamber is arranged between the hose and the internal channel.

By letting such a prechamber constitute a connection between the hose and the internal channel a reliable and secure path for the lubricant from the external container to the reservoir around the bearing is ensured.

In an embodiment of the invention, the internal channel at least partly consists of a substantially longitudinal recess in a shaft, connecting a driving motor with the eccentric bearing.

In an embodiment of the invention, the internal channel at least partly consists of a recess in a bushing, which is arranged around the motor shaft.

In an embodiment of the invention, the external container is equipped with a level control for monitoring the amount of the lubricant in the container.

By using such a level control, it is possible to notice when the container is about to be emptied so that it can be refilled in time before this happens.

In an embodiment of the invention, the external container is arranged to keep the lubricant within the container under a certain excess pressure.

A suitable excess pressure within the external container automatically drives the lubricant through the hose and further on into and through the slurry distributor to the reservoir around the bearing.

In an embodiment of the invention, the bearing is eccentrically mounted around the motor shaft by means of an eccentric bushing.

An eccentric arrangement of the bearing enables adjustment of the slurry dosage through the slurry distributor by means of a mechanism, which is described in further detail below.

Another aspect, which does not form part of the invention, relates to a mounting kit for upgrading an existing slurry distributor to a slurry distributor as described above, which mounting kit comprises a bushing with a recess, which is arranged to at least partially form the internal channel for the lubricant as well as any necessary seals and flanges to form the prechamber and/or the reservoir in the upgraded slurry distributor.

### The figures

In the following, an exemplary embodiment of the invention is described in more detail with reference to the figures, of which
Fig. 1 is a side view of a slurry distributor according to an embodiment of the invention, and
Fig. 2 illustrates a cross-section of the slurry distributor shown in Fig. 1 along the section line marked A-A along with an enlargement of the central parts thereof inside the circle B.

### Detailed description of the invention

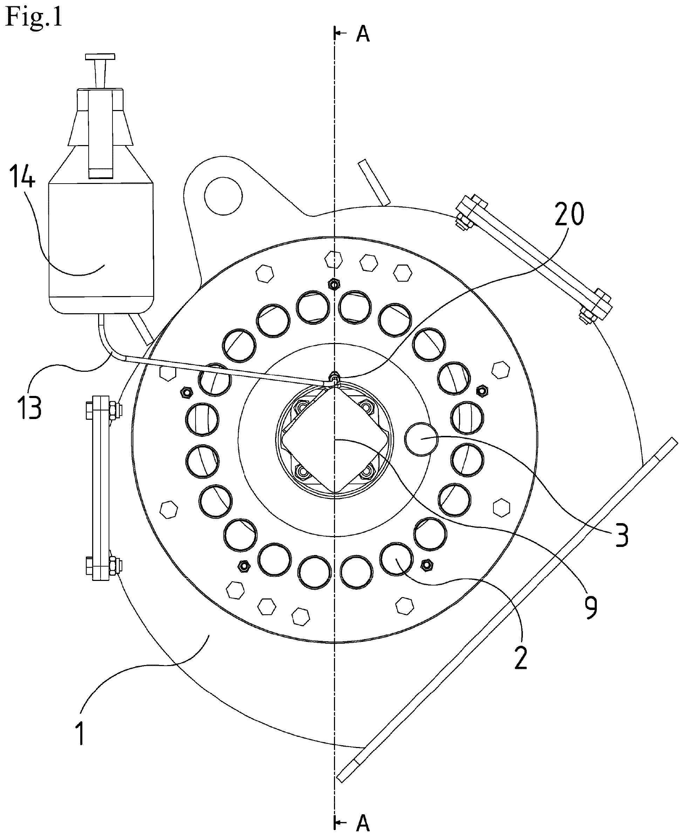

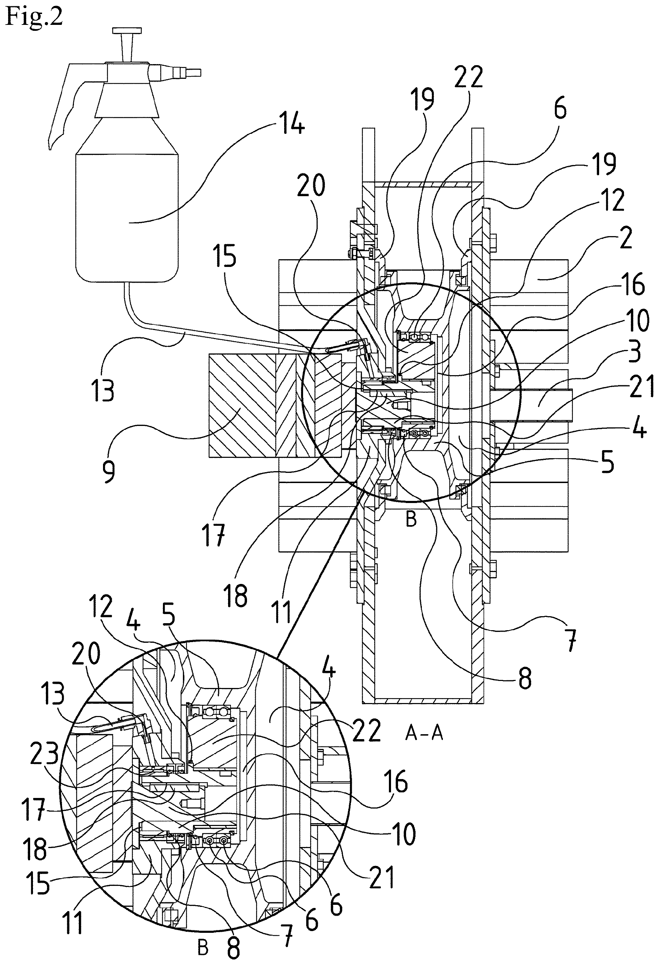

The embodiment of the invention, which is shown in Figs. 1 and 2, comprises a distributor housing 1, on the outer side of which is mounted a number of hose connections 2 arranged in a circle around an air inlet 3. In other embodiments of the invention, the hose connections 2 may be arranged in other configurations such as, for instance, several concentric circles, and optionally the air inlet 3 may be omitted.

On the side of the distributor housing 1, an oil motor 9 is mounted, on the shaft 10 of which is arranged an eccentric bushing 21 with a groove 18. Around this eccentric bushing 21, an eccentric 22 is mounted, which together with a couple of ball bearings 6 and a surrounding bearing housing 5 form an eccentric bearing. In other embodiments of the invention, the two ball bearings 6 can be replaced by a single ball bearing.

This eccentric bearing also includes two seals 7, 8, one of which 8 together with the eccentric bushing 21 and a seal housing 11 in the form of an intermediate flange form a prechamber 15 in the form of a cavity for lubricating oil. On both sides of the bearing housing 5, there are areas 4, in which slurry residues will collect during use of the slurry distributor.

On the bearing housing 5, which is arranged as a so-called "dancing disk" and is rotated by the splined motor shaft 10, one or more eccentrically arranged cutter rings 19 are mounted for shredding the slurry, the number of cutter rings 19 depending on whether the slurry distributor is single-sided or double-sided. Thus, in the illustrated embodiment, there is a double-eccentric rotation with the cutter ring(s) 19 rotating eccentrically about the ball bearings 6, which themselves are eccentrically mounted with respect to the motor shaft 10 due to the eccentric bushing 21. In other embodiments, an ordinary concentric bushing may be used instead of the eccentric bushing shown here.

The eccentric bushing 21 in the illustrated embodiment is provided with an O-ring 12 and a stop groove (not shown), which allows it to be rotated about the motor shaft 10 within an angular range of 180°, whereby the rotational path of the cutting ring(s) 19 and thus the dosage of the slurry passing through the slurry distributor is adjustable. This feature is known from existing slurry distributors, but since the rotation of the eccentric bushing 21 takes place in a slide bearing, this part of the system also benefits from the new lubrication system, which characterizes the present invention.

A supporting bearing 23, which can for instance be a roller bearing or a needle bearing, is arranged between the oil motor 9 and the ball bearings 6 for relieving the bearings within the motor 9. Otherwise, a certain slackness could soon be expected within these bearings due to the eccentric movements of the parts rotated by the motor 9.

The ball bearings 6 are surrounded by an oil reservoir 16 in the form of a further cavity for lubricating oil. From this cavity 16 there is a channel 17 to the prechamber 15, which in turn is connected to an external oil reservoir 14 with lubricating oil through an oil hose 13 extending into an opening hole 20 in the slurry distributor. In this manner, a continuous lubrication of the ball bearings 6 is obtained, because the oil reservoir 16 around the bearings 6 can be constantly fed with lubricating oil from the external oil container 14 through the oil hose 13, the prechamber 15 and the internal channel 17. In other embodiments of the invention, the prechamber 15 may be omitted.

In some embodiments, the external oil container 14 may be provided with level control, so that it is possible to check if the container is running out of lubricant. Furthermore, the container may be arranged so that the lubricating oil therein is under a suitable excess pressure and thus can be driven into the oil reservoir 16 through the oil hose 13, the prechamber 15 (if present) and the internal channel 17.

The internal channel 17 may for example be formed as a longitudinal groove in the shaft 10 of the motor or as a recess in the bushing 21. In the latter case, a slurry distributor according to the invention may be obtained by upgrading an existing slurry distributor by means of a mounting kit (not shown) with a bushing 21 and seals 7, 8 for replacing the existing bushing and seals.

### List of reference numbers

- 1.: Distributor housing
- 2.: Hose connection
- 3.: Air inlet for slurry hoses
- 4.: Area with slurry residues
- 5.: Bearing housing
- 6.: Ball bearing
- 7.: Seal
- 8.: Seal
- 9.: Oil motor
- 10.: Shaft
- 11.: Seal housing
- 12.: O-ring
- 13.: Hose
- 14.: Oil container
- 15.: Prechamber
- 16.: Oil reservoir
- 17.: Oil channel
- 18.: Groove
- 19.: Cutter ring
- 20.: Opening for oil hose
- 21.: Eccentric bushing
- 22.: Eccentric with bearing
- 23.: Supporting bearing

## Claims

1. A slurry distributor for use in a slurry spreading equipment, said slurry distributor comprising a distributor housing (1) containing a ball bearing (6) with a bearing housing (5), on which are mounted one or more eccentrically arranged cutter rings (19),
**characterized in that** a reservoir (16) for a lubricant in the form of lubricating oil or grease is arranged around the bearing (6), said reservoir (16) is having the form of a cavity surrounding the ball bearings (6);
which reservoir (16) is connected with an external container (14) for the lubricant through an internal channel (17) within the slurry distributor and a hose (13) connecting the slurry distributor with the external container (14).

2. The slurry distributor according to claim 1, further comprising a prechamber (15) for the lubricant, which prechamber is arranged between the hose (13) and the internal channel (17).

3. The slurry distributor according to claim 1 or 2, wherein the internal channel (17) at least partly consists of a substantially longitudinal recess in a shaft (10), connecting a driving motor with the eccentric bearing (6).

4. The slurry distributor according to any of the preceding claims, wherein the internal channel (17) at least partly consists of a recess in a bushing (21), which is arranged around the motor shaft (10).

5. The slurry distributor according to any of the preceding claims, wherein the external container (14) is equipped with a level control for monitoring the amount of the lubricant in the container (14).

6. The slurry distributor according to any of the preceding claims, wherein the external container (14) is arranged to keep the lubricant within the container (14) under a certain excess pressure.

7. The slurry distributor according to any of the preceding claims, wherein the bearing (6) is eccentrically mounted around the motor shaft (10) by means of an eccentric bushing (21).

## Patentansprüche

1. Gülleverteiler zur Verwendung in einer Gülleverteilungsanlage, der Gülleverteiler umfassend ein Verteilergehäuse (1), das ein Kugellager (6) mit einem Lagergehäuse (5) enthält, an dem ein oder mehrere exzentrisch angeordnete Schneidringe (19) montiert sind,
**dadurch gekennzeichnet, dass** ein Reservoir (16) für ein Schmiermittel in Form von Schmieröl oder Schmierfett um das Lager (6) herum angeordnet ist, wobei das Reservoir (16) die Form eines Hohlraums aufweist, der die Kugellager (6) umgibt;
wobei das Reservoir (16) mit einem externen Behälter (14) für das Schmiermittel durch einen inneren Kanal (17) innerhalb des Gülleverteilers und einem Schlauch (13), der den Gülleverteiler mit dem externen Behälter (14) verbindet, verbunden ist.

2. Gülleverteiler nach Anspruch 1, ferner umfassend eine Vorkammer (15) für das Schmiermittel, die zwischen dem Schlauch (13) und dem inneren Kanal (17) angeordnet ist.

3. Gülleverteiler nach Anspruch 1 oder 2, wobei der innere Kanal (17) mindestens teilweise aus einer im Wesentlichen länglichen Aussparung in einer Welle (10) besteht, die einen Antriebsmotor mit dem Exzenterlager (6) verbindet.

4. Gülleverteiler nach einem der vorherigen Ansprüche, wobei der innere Kanal (17) mindestens teilweise aus einer Aussparung in einer Buchse (21) besteht, die um die Motorwelle (10) angeordnet ist.

5. Gülleverteiler nach einem der vorherigen Ansprüche, wobei der externe Behälter (14) mit einer Füllstandkontrolle zum Überwachen der Menge an Schmiermittel in dem Behälter (14) ausgestattet ist.

6. Gülleverteiler nach einem der vorherigen Ansprüche, wobei der äußere Behälter (14) angeordnet ist, um das Schmiermittel in dem Behälter (14) unter einem bestimmten Überdruck zu halten.

7. Gülleverteiler nach einem der vorherigen Ansprüche, wobei das Lager (6) mittels einer Exzenterbuchse (21) exzentrisch um die Motorwelle (10) montiert ist.

## Revendications

1. Distributeur de fumier liquide destiné à être utilisé dans un équipement d'épandage de fumier liquide, ledit distributeur de fumier liquide comprenant un boîtier de distributeur (1) contenant un roulement à billes (6) avec un boîtier de roulement (5), sur lequel sont montées une ou plusieurs bagues de coupe agencées de manière excentrique (19),
**caractérisé en ce qu'**un réservoir (16) pour un lubrifiant sous la forme d'huile ou de graisse lubrifiante est agencé autour du roulement (6), ledit réservoir (16) possédant la forme d'une cavité entourant les roulements à billes (6) ;
lequel réservoir (16) est raccordé à un récipient externe (14) pour le lubrifiant par un canal interne (17) à l'intérieur du distributeur de fumier liquide et un tuyau (13) raccordant le distributeur de fumier liquide au récipient externe (14).

2. Distributeur de fumier liquide selon la revendication 1, comprenant en outre une préchambre (15) pour le lubrifiant, laquelle préchambre est agencée entre le tuyau (13) et le canal interne (17).

3. Distributeur de fumier liquide selon la revendication 1 ou 2, ledit canal interne (17) étant constitué au moins en partie d'un évidement sensiblement longitudinal dans un arbre (10), raccordant un moteur d'entraînement au roulement excentrique (6).

4. Distributeur de fumier liquide selon l'une quelconque des revendications précédentes, ledit canal interne (17) étant constitué au moins en partie d'un évidement dans une douille (21), qui est agencé autour de l'arbre moteur (10).

5. Distributeur de fumier liquide selon l'une quelconque des revendications précédentes, ledit récipient externe (14) étant équipé d'une commande de niveau pour surveiller la quantité de lubrifiant dans le récipient (14).

6. Distributeur de fumier liquide selon l'une quelconque des revendications précédentes, ledit récipient externe (14) étant agencé pour maintenir le lubrifiant à l'intérieur du récipient (14) sous une certaine surpression.

7. Distributeur de fumier liquide selon l'une quelconque des revendications précédentes, ledit roulement (6) étant monté de manière excentrique autour de l'arbre moteur (10) au moyen d'une douille excentrique (21).
